# EUROPEAN PATENT SPECIFICATION

(11) **EP 2 912 524 B1**
(45) Date of publication and mention of the grant of the patent: **06.09.2017**
(21) Application number: 13849630.2
(22) Date of filing: 23.10.2013
(51) Int. Cl.: G05B 1/00, G05B 19/00, G05B 15/00, G06Q 30/00

(54) **SYSTEM AND METHOD FOR EXCHANGING SUPPORT DATA WITH A DEVICE HAVING NO PHYSICAL USER INTERFACE**
SYSTEM UND VERFAHREN ZUM AUSTAUSCH VON HILFSDATEN MIT EINER VORRICHTUNG OHNE PHYSISCHE BENUTZEROBERFLÄCHE
SYSTÈME ET PROCÉDÉ D'ÉCHANGE DE DONNÉES DE SUPPORT AVEC UN DISPOSITIF DÉPOURVU D'INTERFACE UTILISATEUR PHYSIQUE

(30) Priority: 23.10.2012 US 201261717522 P
(43) Date of publication of application: 02.09.2015
(73) Proprietor: Kortek Industries Pty Ltd, Brisbane, QLD 4000 (AU)
(72) Inventor: DAVIS, Barrie, Sanctuary Cove, Queensland 4212 (AU); DAVIS, Benjamin, Alderley, Queensland 4051 (AU)
(74) Representative: von Bülow & Tamada
(86) International application number: PCT/AU2013/001231
(87) International publication number: WO 2014/063195

(56) References cited:
- US-A1- 2011 145 836
- US-A1- 2012 226 619
- US-A1- 2012 226 764

## Description

### Field of the Invention:

The present invention relates to the entering of technical support, warranty and service information into the configurable and readable memory of a device not traditionally having an external interface for accessing the memory so that the information can be accessed by an application running on a personal controller to facilitate a user in making contact with a party for technical support, warranty or service assistance.

### Background of the Invention:

Many devices are starting to incorporate technology that allows them to communicate and exchange data with smartphones, tablets, and computers through peer-to-peer and network communication methods. In most cases, the data exchanged between a device and smartphone, tablet or computer is controlled by an application specific program more commonly referred to as an App. In certain instances, devices, machines or equipment may stop working in the field, or may require service on an "as needed" basis or according to a schedule. In these cases, users must usually try to find the appropriate contact details and proof of purchase in order to process and/or validate a technical support request, warranty claim, or book a service according to the manufacturers published guidelines.

Document US 2012/226619 A1 a system and method for providing an After-Sale service (AS) to an electronic device via a mobile device. The method includes receiving, by a mobile device, state information from the electronic device, transmitting, by the mobile device, the state information regarding the electronic device to a cloud server, determining, by the cloud server, whether the electronic device is experiencing a fault, via the received state information, determining, by the cloud server, whether the cloud server has fault fixing firmware for fixing the fault, transmitting, when the cloud server has the fault fixing firmware, the fault fixing firmware to the mobile device, transmitting, by the mobile device, the fault fixing firmware to the electronic device, and installing the fault fixing firmware in the electronic device.

Document US 2011/145836 A1 discloses a cloud computing monitoring system that has an alert capturing system and a message transfer system that provides performance tracking and alert management to a local monitoring system. The alert capturing system may operate as part of a managed code framework and may capture and route alerts that may be transmitted to an operating system, as well as application exceptions and debugging information. A message queuing system may transmit the alerts to a local monitoring system, which may have a connector that subscribes to the cloud system's message queuing system.

Document US 2012/226764 A1 discloses a method and system for networking a plurality of appliances. The method and system include providing an appliance on a network, controlling operation of the appliance with a microcontroller, storing on a memory coupled with the microcontroller, computer executable instructions for operating the appliance, sensing the operation of the appliance, displaying information regarding the operation of the appliance, and communicating the operational data on a network. Network connectivity includes communication directly with a network, and with another appliance. A host system is connected to the network and adapted to receive the usage data and to transmit data to the appliance to influence operation of the appliance.

### Summary of the Invention:

In one preferred embodiment, the present invention includes four parts: a configurable and readable memory in a device that can wirelessly communicate with other machines; a hand held, battery powered personal controller that is able to wirelessly communicate with a device that has configurable and readable memory; an installer applications program (Installer App) able to exchange data with the configurable and readable memory of the device using a wireless communications link between the personal controller and the device; and a user applications program (User App) able to exchange data with the configurable and readable memory of a device using a wireless communications link between a personal controller and the device.

The device with configurable and readable memory preferably has wireless communication capabilities configured to support at least one of the following communication standards: network Wi-Fi; Wi-Fi Direct; Bluetooth SIG class 2.1+EDR or later; and/or Near Field Communications (NFC). As used herein, "network Wi-Fi" refers to the Wi-Fi Alliance definition as any "wireless local area network (WLAN) products that are based on the Institute of Electrical and Electronic Engineers (IEEE) 802.11 standards" including any amendments or extensions. As used herein, the term "Wi-Fi Direct" refers to a device configured to support the Wi-Fi Alliance Wi-Fi Direct specification and amendments, extensions or proprietary implementations of Wi-Fi peer to peer technology. As used herein, "Near Field Communications," or "NFC," refers to the open platform wireless technology standardized in ECMA-340, ISO/IEC18092, ECMA-352 and ISO/IEC 21481. These include existing radio-frequency identification (RFID) standards such as ISO/IEC14443 (Type A and Type B) and Felicity Card (FeliCa). Reference to NFC as used herein also extends to any standards specified by the NFC Forum for NFC technology, including any amendments, extensions or proprietary implementations. The device preferably does not have a physically connected external user interface, such as a USB port, keypad or touchscreen, that permits a user to manually enter information into the memory. More preferably, the device is free of any user interface forming a part of the exterior of the device in which a user would type in information for storage in the memory of the device.

Examples of devices include, but are not limited to garage door mechanisms, gate mechanisms, automatic blind mechanisms, screen mechanisms, light switches, lighting controllers, power points, power control mechanisms, climate control equipment such as thermostats and air conditioning units, fire control equipment, sprinkler and watering systems, pumps, pool filtration systems, gas metering and control equipment, peripheral computer equipment such as printers and speakers, and any electronic device that can be configured to perform a function, but does not have the capability to readily display information.

The configurable and readable memory preferably includes a non-volatile memory that is read/write and able to retain stored data when power is removed. Typically, the non-volatile memory would be of the type called "flash memory" and may preferably support a data transfer connection by an industry standard Serial Peripheral Interface bus (SPI Bus), although other suitable memory types and bus or connection arrangements and protocols may also be used and are within the scope of the invention. In some embodiments, the non-volatile memory may form part of a Microcontroller Unit (MCU). In some embodiments, it may be preferable for the memory to be read only.

The personal controller is preferably a commercially available cellular or mobile phone commonly known as a smartphone that supports at least one of the following wireless communication standards: network Wi-Fi; Wi-Fi Direct; Bluetooth; and/or NFC. Unless otherwise noted, the personal controller will be described in terms of a smartphone, though the invention is not so limited. For example only, the personal controller may be any portable device which can download or install by other means an App, have a suitable interface the user can interact with to control the App in order to execute required functions, and have the wireless communications capability to establish communications with a device that has configurable and readable memory. Examples of personal controllers include smartphones, tablets, laptops and notebook personal computers.

The Installer App and User App are preferably programs running on a smartphone that are able to exchange data with the configurable and readable memory of a device using a wireless communications link between the smartphone and the device. It can be appreciated that if an App can communicate with a device, it may serve as a control interface for other functional aspects the device is designed to perform. By way of example only, this may include opening and closing a garage door or programming parameters into a light controller. For that reason, the ability of the Installer App and/or User App to interpret and enter data into the configurable and readable memory of a device may be an integrated function of a larger App that can perform many functions.

In one preferred embodiment, the Installer App and User App may not serve any other function other than accessing the configurable and readable memory on a device to enter data and/or retrieve and interpret data.

In the present invention, the wireless communications link between a device with configurable and readable memory and smartphone is preferably formed via network Wi-Fi, Wi-Fi Direct, Bluetooth, and/or NFC, the functions and operation of which would be understood by those familiar with the art. Preferably the smartphone and the device are capable of forming a wireless communications link using at least one wireless communication method, the Installer App and User App preferably using a communications link that can be activated to access the configurable and readable memory of the device in order to exchange data.

The present invention, in one preferred aspect, allows an installer through an Installer App running on a smartphone to access the configurable and readable memory of a device to save data into that configurable and readable memory even when the device does not have an external interface for entering data, such as a USB port or keypad. The present invention, in another preferred aspect, allows a user through a User App running on a smartphone to access the configurable and readable memory of a device to read and save data into the memory of the smartphone running the User App. The User App preferably uses the data read from the configurable and readable memory of a device to populate the memory of the resident smartphone for corresponding data fields. Once the data has been read, the user will preferably be presented in the User App with a range of information and various methods the user can use to initiate contact with an external party for technical support, warranty, and/or service assistance. The User App is preferably configured to utilize the full communications capabilities of the smartphone and may provide the user with a choice of available methods for initiating contact, selection of the preferred method by the user in the User App causing it to initiate contact using that method and data read from the configurable and readable memory of a device as the appropriate contact details. By way of example only, contact methods may include phone call, short message service (SMS), email, or an automatic transmission by the App.

In one preferred aspect, the present invention is directed to a method for facilitating a request for technical assistance for a device having a configurable memory, but not having a physically connected external user interface that permits a user to enter information into the configurable memory. The method includes configuring a processor on a personal controller with a plurality of pre-defined fields that correspond to data specific to the device; extracting data from the configurable memory of the device via a wireless connection; populating at least a portion of the pre-defined fields on the personal controller with the extracted data; and transmitting to a remote location, using the personal controller, the request for technical assistance for the device, the request utilizing at least a portion of the data extracted from the device.

In another preferred aspect, the present invention is directed to a system for facilitating a request for technical assistance. The system includes a personal controller having a processor, a memory and a wireless peer-to-peer transceiver. The system further includes a device having a configurable memory and a wireless peer-to-peer transceiver, the device not having a physically connected external user interface that permits entry of data into the configurable memory, the processor of the personal controller being programmed with a plurality of pre-defined fields corresponding to information specific to the device. The processor of the personal controller is programmed to: use a wireless peer-to-peer communications link established between the personal controller and the device to extract data from the configurable memory of the device; populate at least a portion of the pre-defined fields with the extracted data; and communicate information specific to the device to a remote location as part of the request for technical assistance for the device, the information containing at least a portion of the extracted data.

In a further preferred aspect, the present invention is directed to a method for inputting or updating data in a device having a configurable memory and a transceiver adapted for peer-to-peer communications, the device not having a physically connected external user interface that permits a user to enter data into the configurable memory. The method includes establishing a wireless peer-to-peer communications link between the device and a personal controller having a processor; and executing a program with the processor of the personal controller, the program including pre-defined fields that correspond to data specific to the device, the program being configured to upload data from at least a portion of the pre-defined fields of the program to the configurable memory of the device utilizing only the wireless peer-to-peer communications link.

In an additional preferred aspect, the present invention is directed to a system for inputting or updating data. The system includes a personal controller having a processor, a memory and a wireless peer-to-peer transceiver. The system further includes a device having a configurable memory and a wireless peer-to-peer transceiver, the device not having a physically connected external user interface that permits entry of data into the configurable memory, the processor of the personal controller being programmed with a plurality of pre-defined fields corresponding to information specific to the device, the processor of the personal controller being programmed to upload data from at least a portion of the pre-defined fields of the program to the configurable memory of the device utilizing only a wireless peer-to-peer communications link established between the personal controller and the device.

In a further preferred aspect, the present invention is directed to a method for tracking a device having a configurable memory, but not having a physically connected external user interface that permits a user to enter information into the configurable memory. The method includes executing a program on a personal controller using a processor on the personal controller, the program including pre-defined fields that correspond to data specific to the device, the program being configured to extract data from the configurable memory of the device via a wireless connection and populate at least a portion of the pre-defined fields of the program with the extracted data; populating at least another portion of the pre-defined fields with information provided by a user of the personal controller; transmitting to a remote location, using the personal controller, data from the pre-defined fields, the data being transmitted including at least a portion of the extracted data and at least a portion of the information provided by the user of the personal controller; and receiving, at the remote location, the data transmitted from the personal controller and updating a record on a database, the record corresponding to the device and including manufacturing information associated with the device.

### Brief Description of the Figures:

Fig. 1 is a perspective view of a smartphone in accordance with one preferred embodiment of the present invention.
Fig. 2 is a block diagram of the functional elements of a device with a configurable and readable memory.
Fig. 3 is a system pictorial representation of smartphone of Fig. 1 and its interaction with the device of Fig. 2.
Fig. 4 is a flow diagram showing an exemplary sequence of events between a user and an applications program loadable onto the smartphone of Fig. 1 for discovery and communication with the device of Fig. 2.
Fig. 5 is an indicative pictorial representation of the Installer App running on the smartphone of Fig. 1.
Fig. 6 is a flow diagram showing an exemplary sequence of events between a user, the Installer App of Fig. 5, and the device of Fig. 2.
Fig. 7 is an indicative pictorial representation of the User App running on the smartphone of Fig. 1.
Fig. 8 is a flow diagram showing an exemplary sequence of events between a user, the User App of Fig. 7, and the device of Fig. 2.
Fig. 9 is a flow diagram showing an exemplary sequence of events between a user, the User App of Fig. 7, and the device of Fig. 2 using NFC.

### Detailed Description of the Drawings:

Alternative embodiments of the invention will be apparent to those skilled in the art from consideration of the specification and practice of the invention disclosed herein. It is intended that the specification and examples be considered as exemplary only, with a true scope and spirit of the invention being indicated by the claims which follow.

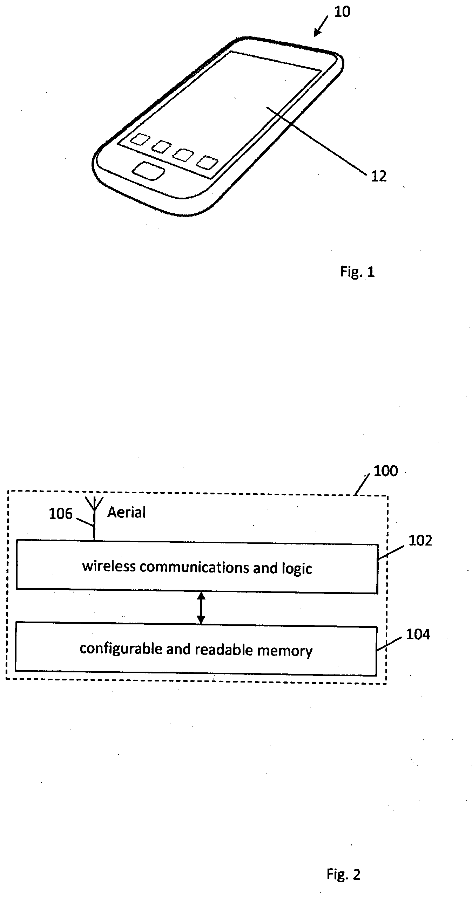

Fig. 1 is a perspective representation of a smartphone 10 which uses a wireless link to communicate with a device with configurable and readable memory. Smartphone 10 is preferably a commercially available, conventional smartphone. Some of the basic functions the smartphone preferably includes are: a touch sensitive graphical screen interface 12; a compatible radio transceiver; the ability to run an application program (App) specific to the individual smartphone that provides a control interface for loading data into, and/or reading data from, the configurable and readable memory of a device; and the means for initiating contact with an external party. As used herein, the term "App" will be used to refer to an application program that provides the control interface between the smartphone and a device with configurable and readable memory. While the functions of the App will be essentially the same for all smartphones, each App itself will need to be compatible with its smartphone operating system. In the examples that follow, specific coding for each App has been omitted for simplicity as a person of ordinary skill in the art would be able to understand and reproduce the functionality of the described embodiments without the need for particular coding.

Smartphone 10 is preferably configured to operate across a range of wireless communications technologies, including the technology to communicate via at least one of: network Wi-Fi; Wi-Fi Direct; Bluetooth; and/or NFC standards. While preferred embodiments of the present invention use a smartphone as its controller, and specifically a smartphone incorporating at least one of: network Wi-Fi; Wi-Fi Direct; Bluetooth; and/or NFC, other wireless communications systems could be used depending on the specific requirements of the application of the invention.

Fig. 2 shows a block diagram outlining a preferred embodiment of functional elements of a device 100 with a configurable and readable memory which has wireless communications and logic 102, a configurable and readable memory 104 and an aerial 106. Depending on the cost and the desired operational functions, wireless communications and logic 102 may include: only a network Wi-Fi radio; only a Wi-Fi Direct radio; only a Bluetooth radio; only a NFC radio; or any combination thereof.

In one preferred embodiment, the logic component of the wireless communications and logic 102 may be configured only to support wireless communications and data management where the device is designed primarily to share information stored in configurable and readable memory 104.

In another preferred embodiment, the logic component of wireless communications and logic 102 could be part of a more advanced system capable of performing other tasks in conjunction with supporting wireless communications and data management. By way of example only, wireless communications and logic 102 may be capable of causing a garage door mechanism to open and close, or a lighting mechanism to switch on and off. While not depicted, wireless communications and logic 102 may incorporate, or interface with, other circuits to perform higher order tasks.

In another preferred embodiment, device 100 could be integrated as a function of a more complex system, or System on Chip (SOC), or System in a Package (SiP) solutions.

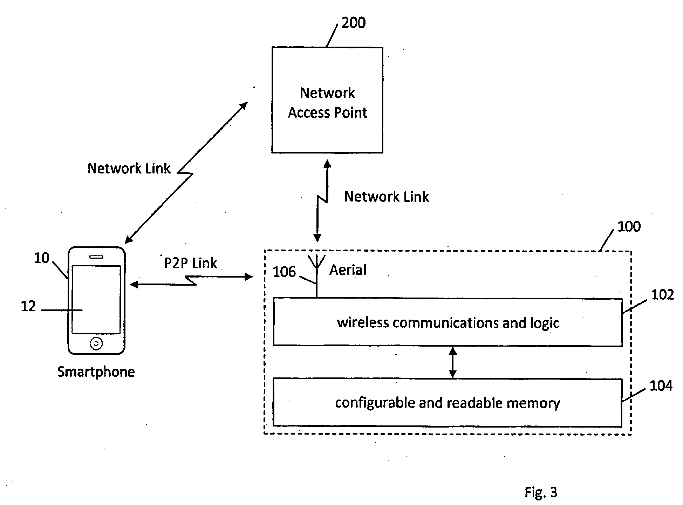

Fig. 3 is a pictorial representation of smartphone of Fig. 1 and its interaction with device 100. Both smartphone 10 and device 100 preferably support at least one of: network Wi-Fi; Wi-Fi Direct; Bluetooth; and/or NFC standards. In order for smartphone 10 and device 100 to establish a wireless communications link, both preferably share at least one compatible wireless communications capability.

In the present invention, the process that device 100 and smartphone 10 preferably use in forming a wireless communications link may include network Wi-Fi through an access point 200, and/or forming a peer-to-peer communications link using Wi-Fi Direct, Bluetooth, and/or NFC, the details of which would be understood by those familiar with the art. Preferably the smartphone and device are capable of forming a wireless communications link using at least one wireless communication method, the Installer App or User App preferably being configured to use whatever communications link is active or available between the smartphone 10 and device 100 in order to access configurable and readable memory 104 to enter and/or interpret data.

In one preferred embodiment, where smartphone 10 and wireless communications and logic 102 both support the Wi-Fi Direct specification, a preferred method for establishing a communications link is via Wi-Fi Direct on a negotiated peer-to-peer basis without the need for any intermediary hardware and/or systems. Smartphone 10 and wireless communications and logic 102 will negotiate which device will be the Group Owner in accordance with the Wi-Fi Alliance Wi-Fi Direct specification, as amended from time to time, in establishing a peer-to-peer Wi-Fi Direct communication link.

In another preferred embodiment, where smartphone 10 only supports network Wi-Fi and Bluetooth, and wireless communications and logic 102 supports at least network Wi-Fi and Wi-Fi Direct, a preferred communications link will be established by wireless communications and logic 102 operating according to the Wi-Fi Direct specification as a Wi-Fi Direct access point (softAP), allowing device 100 to appear to smartphone 10 as a Wi-Fi Direct access point. After being discovered as a Wi-Fi Direct access point, a Wi-Fi Direct device is able to communicate peer-to-peer with a network Wi-Fi device that supports the IEEE 802.11 specification as amended from time to time. In this instance, smartphone 10 will receive a device discovery message from device 100 as if from a network access point and be able to establish a peer-to-peer communications link without having to connect to network access point 200. The intricacies of establishing a communications link between a Wi-Fi Direct device and network Wi-Fi devices are defined in the Wi-Fi Alliance specifications and would be understood by practitioners skilled in communications systems protocols and methods.

Wi-Fi Direct, Bluetooth and NFC are but three examples of two-way, peer-to-peer communication technologies useable with preferred embodiments of the present invention. It is envisaged that future two-way communication systems based on other specifications, methods, technologies or protocols will be developed and be useable with preferred embodiments of the present invention. A peer-to-peer communication link is a preferred method because such an arrangement eliminates a need for one or more base stations or other intermediary devices, such as a wireless router or access point. Therefore, in a preferred embodiment of the present invention, such intermediary devices are specifically excluded where a wireless peer-to-peer communication method is available, so that the communication between the smartphone and the device with configurable and readable memory will preferably be peer-to-peer. Also excluded in a preferred embodiment is the use of conventional wireless technology operating in an ad-hoc mode as such technology is overtly complex in relation to any benefits such technology may otherwise provide.

Prior to being able to communicate with each other, smartphone 10 and device 100 are paired preferably using a peer-to-peer wireless communications method. Smartphone 10 may be configured to automatically setup a wireless link with device 100, but access to the configurable and readable memory 104 is preferably controlled by the Installer App or User App. Once a wireless link has been established, the Installer App or User App preferably determines the commands and responses smartphone 10 exchanges with device 100. The Installer App or User App is preferably configured to translate a user's or an operator's requests, inputted by the user via the smartphone's graphics screen 12, into specific commands that are transferred to the wireless communications and logic 102 through the transmitter of smartphone 10.

The Installer App or User App is preferably activated and controlled by the user through the smartphone's touch sensitive graphics screen 12. The Installer App or User App may be preloaded on a specific device, or could be downloaded from an appropriate server through a wireless network, Internet or computer.

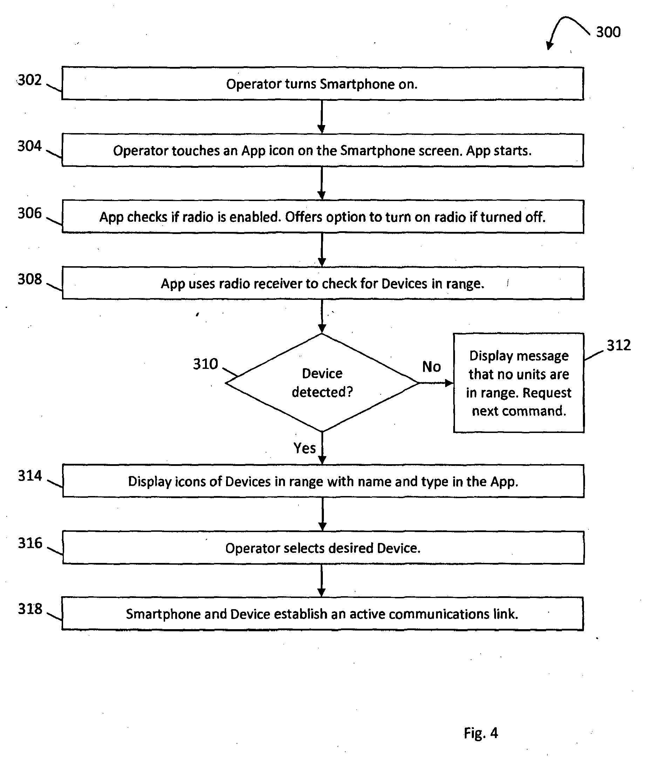

Fig. 4 is a flow diagram of a method 300 that includes actions taken by a user to discover and open communications with device 100. In step 302, the user switches the smartphone on and the smartphone operating system displays a number of icons on its graphics screen. The user may have to scroll or page the display to locate the icon for the Installer App or User App depending on the smartphone operating system. Once located, in step 304 when the user touches the Installer App or User App icon on the touch sensitive graphical screen 12, the smartphone's operating system starts the appropriate App. In step 306, the Installer App or User App checks to see if the appropriate smartphone radio is active and if not, requests the user to turn it on. In some implementations, the Installer App or User App may automatically turn the radio on. Once the radio is on, the Installer App or User App in step 308 scans multiple radio frequencies looking for compatible devices with a configurable and readable memory within wireless communications range. If in step 310 no devices are detected, the Installer App or User App proceeds to step 312 and advises the user that no devices could be found. In step 314, if one or more compatible devices are detected, the Installer App or User App determines the name of the device and displays this information on the smartphone's graphical screen. If the user selects one of the devices via the displayed icons in step 316, the Installer App or User App in step 318 then displays any prerequisites for establishing a wireless communications link between the smartphone and selected device. The correct completion of any prerequisite will establish an active communications link between the smartphone and the device(s). Such prerequisites may include passwords and/or other security measures. If the smartphone and the device have previously established a wireless communications link, protocols for establishing a new link may be automatically exchanged and an active communications link established when the user selects the device at step 316.

In one preferred embodiment, the Installer App or User App may automatically activate the wireless communications transceiver of smartphone 10 at step 304, and search for devices with configurable and readable memory within wireless range. Where a device is discovered that has previously been paired with smartphone 10, the Installer App or User App may preferably automatically establish an active communications link or, if more than once device is found, offer the user the ability to select a device with which to establish an active communications link. Where a device with a configurable and readable memory is discovered that has not previously been paired with smartphone 10, the Installer App or User App may preferably offer the user the ability to pair the device with smartphone 10 and initiate the necessary steps for pairing as per step 318.

It will be appreciated that the steps described above may be performed in a different order, varied, or certain steps added or omitted entirely without departing from the scope of the present invention. By way of example only, some smartphone operating systems may limit the ability of an App to establish an active communications link, necessitating the establishment of an active communications link between a smartphone and device using a pairing process specified by the smartphone operating system prior to starting the Installer App or User App.

The Installer App and User App preferably present their control interfaces as a combination of graphics and text on graphics screen 12. Graphics screen 12 is also preferably touch-sensitive, allowing the Installer App or User App to present a selection of options to the user and determine which of the options the user wants by the user touching the graphics screen. An important consideration in using a touch sensitive graphics screen 12 is the ease that the graphical presentation can be changed for different languages. While the images may remain the same, the graphical interface allows the text of, for example, an alphabetic language such as English to be replaced with, for example, a pictorial language such as Japanese by changing the graphics displayed on the graphics screen. The underlying functions represented on the screen preferably respond to the user's selection by touch irrespective of the language used for the display.

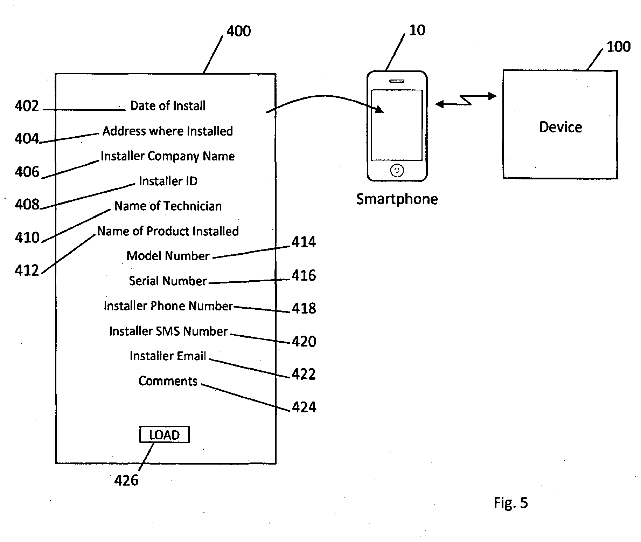

Fig. 5 is an indicative pictorial representation of a screen 400 of the Installer App running on smartphone of Fig. 1 in one preferred embodiment of the invention. Installer App screen 400 preferably displays a selection of configurable fields, the data of which can, in the same or different format, be transferred to, or read from, the configurable and readable memory 104 of device 100. In one preferred aspect, the configurable fields may be preset in the Installer App for device 100, or may be generated by the Installer App based on information reported by device 100. By way of example only, the Installer App fields may include information such as: date of install 402, location where the product is installed 404, name of the installer company 406, installer identification number 408, name of the installation technician 410, name of the product installed 412, model number 414, serial number 416, installer's phone number 418, installer's short message service (SMS) number 420, installer's email address 422, and a miscellaneous comments field 424.

Touching a field in the Installer App that can be modified by the user preferably allows the entry or modification of information contained therein. In one preferred aspect, some of the fields in the Installer App may need to be manually configured by the user pertaining to the specific installation at hand, while other fields common to all installations by that particular user may be pre-configured in the Installer App. By way of example only, fields that may be common to all installations from a particular user that could be pre-configured include: the name of the installer company 406, the installer identification number 408, the name of the installation technician 410, installer's phone number 418, installer's short message service (SMS) number 420, and installer's email address 422.

In another preferred aspect, certain fields in the Installer App could be automatically completed by a data exchange between the Installer App and device 100. By way of example only, fields that may be automatically completed by the Installer App from a data exchange with device 100 could include information specific to the device that was actually installed, such as the product name 412, model number 414, and serial number 416.

In another preferred aspect, the Installer App may preferably be able to use other machine readable or data exchange methods to automatically complete certain fields. By way of example only, this could include using an optical reader such as a smartphone camera to read a barcode, matrix code, or other visual element on device 100 in order to automatically complete fields such as, by way of example only, name of product installed 412, model number 414, and serial number 416. By way of another example, the date of install 404 could be automatically completed using the date reported as current by the smartphone's operating system. By way of another example, the location of the install 402 could be automatically completed using the global position as reported by the smartphone's operating system.

When the installer has finished configuring fields, the Installer App will preferably offer the user the ability, by way of a load button 426, to transfer the data from the Installer App into configurable and readable memory 104 of a device using an active wireless communications link. The Installer App preferably indicates that the data has been successfully transferred after completion of the transfer. After device 100 has been loaded with data for the first time, each subsequent time the Installer App establishes a communications link with that device, the Installer App will preferably dynamically update screen 400 with the information currently stored in configurable and readable memory 104.

In one preferred embodiment, it may be desirable for the Installer App to transfer a copy of all data and fields relating to a particular device 100 to an external device on the Internet such as a server.

It will be appreciated that the fields and steps described above for the Installer App may be varied, or certain fields or steps added or omitted entirely without departing from the scope of the present invention.

While not shown, it can be appreciated that in some situations, device 100 may not require installation by a third party. In one preferred embodiment, the data stored in configurable and readable memory 104 may be pre-loaded during manufacture. By way of example only, data that may be pre-loaded could include information such as the manufacturer's company name, country of origin, model number, date of manufacture, batch number, intended jurisdiction of use, company website, company phone number, company email, company SMS contact, service schedules and/or other data. In instances where the configurable and readable memory supports both read and write capabilities, it may be preferable for the manufacturer to lock accessibility to the configurable and readable memory location after data has been entered into the device so that the memory functions as read only. It will be appreciated that the fields described above may be varied, or certain fields added or omitted entirely without departing from the scope of the present invention.

In another preferred embodiment, where a device has the necessary level of processing capabilities, it may be preferable to allow the device to enter data into its own configurable and readable memory 104. By way of example only, this may include recording the date a device is first used in order to calculate future service and/or warranty periods, or saving error codes or reports if the device is capable of generating such codes or reports. It will be appreciated that the fields described above may be varied, or certain fields added or omitted entirely without departing from the scope of the present invention.

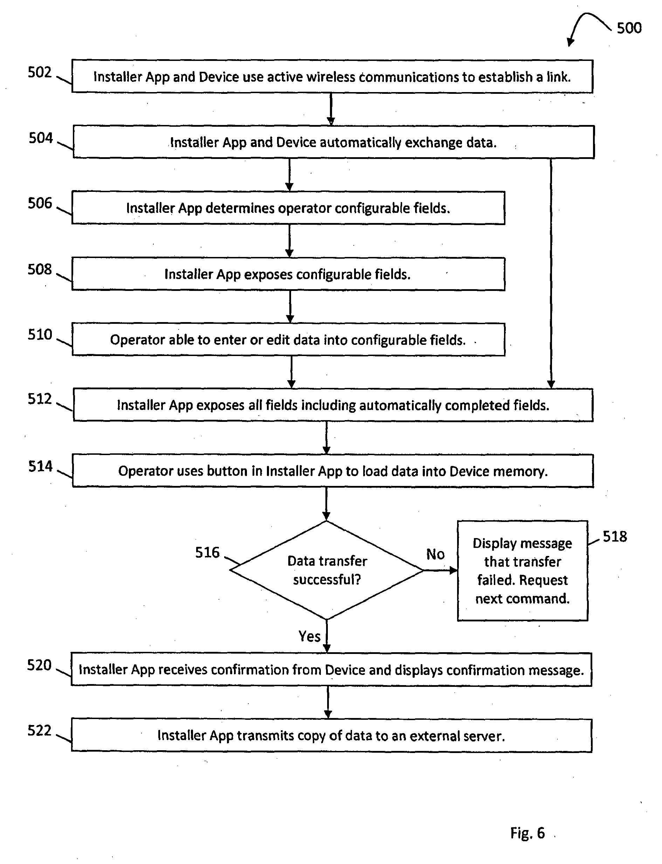

Fig. 6 is a flow diagram of a method 500 showing a sequence of events between a user, the Installer App (Fig 5) and device 100 to illustrate the functionality of the Installer App. At step 502, smartphone 10 and device 100 establish an active wireless communications link allowing the Installer App to communicate with device 100. At step 504, the Installer App and device 100 preferably perform an initial data exchange, allowing the Installer App and device 100 to automatically populate, transfer, update, modify, amend, enter, initialize or delete any data between them as may be required or desired.

At step 506, the Installer App preferably determines what user configurable fields need to be exposed or displayed. In one preferred aspect, the configurable fields may be preset in the Installer App for device 100, or may be generated by the Installer App based on information reported by device 100 at step 504. At step 508, the Installer App preferably exposes those fields that can be configured by the user in a format that allows the user to input or modify the information contained therein. At step 510, the user enters or edits any needed data in a configurable field preferably by touching the smartphone screen corresponding to the field they wish to edit, causing the Installer App to allow entry of data into the field selected through the smartphone touch screen. In some preferred embodiments, data may be entered into the configurable fields by other machine readable or data exchange methods. By way of example only, this could include using an optical reader such as a smartphone camera to read a barcode, matrix code, or other visual element on device 100, or other wireless methods such as scanning an RFID tag.

At step 512, the Installer App also preferably exposes fields that have been automatically populated from data exchanged at step 504. When the user is satisfied with all fields, at step 514 they may preferably use the load button 426 (Fig.5) to transfer the data from the Installer App into the configurable and readable memory of the device using an active wireless communications link. At step 516, the Installer App preferably monitors to ensure that the data is successfully transferred into the memory of device 100. At step 518, if device 100 reports an error or does not confirm a successful transfer, the Installer App preferably informs the user that the transfer failed and requests the next command. At step 520, if the Installer App receives confirmation from device 100 that the data was successfully transferred, the Installer App preferably indicates that the data was successfully transferred.

At step 522, the Installer App transmits a copy of the user configurable fields and data transferred from device 100 to an external server using a native communication method supported by the smartphone.

After device 100 has stored data for the first time, each subsequent time the Installer App establishes a communications link with that device, the Installer App preferably dynamically updates screen 400 with the information currently stored in configurable and readable memory 104 of device 100 after an automatic exchange of data at step 504.

It will be appreciated that the steps described above may be performed in a different order, varied, or certain steps added or omitted entirely without departing from the scope of the present invention. For example only, the Installer App may be programmed without transmitting a copy of the user configurable fields and data transferred from device 100 to an external server if desired.

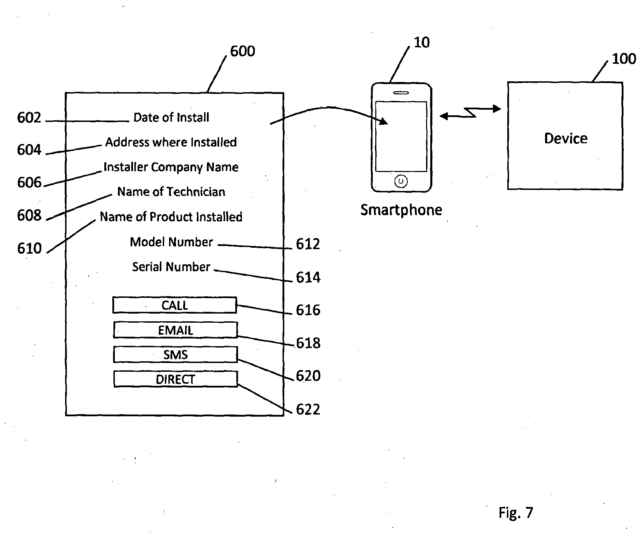

Fig. 7 is an indicative pictorial representation of a screen 600 of the User App running on smartphone 10 of Fig. 1 in one preferred embodiment of the invention. User App screen 600 preferably displays a selection of fields, some of the underlying data being preferably populated from information stored in the configurable and readable memory 104 of device 100. By way of example only, the User App fields may include information such as: the date of install 602, location where the product is installed 604, name of the installer company 606, name of the installation technician 608, name of the product installed 610, model number 612, and serial number 614. The User App may also preferably store data that is not exposed on the User App screen 600. By way of example only, such information may include the installer identification number 408 and comments 424 (Fig. 5). In certain embodiments it may preferable for the model number 612, serial number 614, and other fields to also be hidden from the user.

While not shown, in one preferred embodiment, it may be preferable for a user to complete a number of configurable fields in the User App. By way of example only, fields may include information such as the user's name, place of purchase, location, name of product installed, date of purchase, user's phone number, user's address and/or other contact details. When the user has finished configuring the fields, the User App may preferably offer the user the option to transfer the data from those fields into configurable and readable memory 104 by way of a wireless communications link. In one preferred embodiment, it may be preferable that the user's data is stored only in the memory of the smartphone running the App and not transferred to the configurable and readable memory on the device.

In certain situations, it may be preferable for the User App to automatically load data into, or read from, configurable and readable memory 104 without requiring user interaction or confirmation. By way of example only, this could include: recording the date that the User App and device 100 establish their first successful wireless communications link, transferring error codes or reports generated by the device into the User App, or updating any changed data parameters between the User App and configurable and readable memory 104.

In one preferred aspect, when the User App starts for the first time, it may preferably try to read the data stored in configurable and readable memory 104 of a device in order populate memory for the corresponding data fields in the User App. If the User App cannot detect that a wireless communications link has been established between smartphone 10 and device 100, the User App may preferably automatically establish a wireless communications link or advise the user that a wireless communications link needs to be established.

Once the User App has read data from device 100 and populated its own memory locations for the corresponding data fields, the user will preferably be presented in the User App with a range of information and various methods the user can use through the App to initiate a technical support request, warranty claim, book a service according to the manufacturer's published guidelines, or other functions. The User App is preferably able to utilize the full communications capabilities of the smartphone and may provide the user with a choice of available methods for initiating contact, selection of the preferred method by the user in the User App causing the User App to initiate contact using that method and information read from configurable and readable memory 104 as the appropriate contact details. By way of example only, contact methods that may be initiated inside the User App include a phone call 616, email 618, SMS 620, or a direct communication 622 within the User App.

In one preferred aspect, where device 100 requires servicing according to a pre-defined schedule, the User App may preferably use the date of install 602 to calculate a service schedule and alert the user when a service is due. Where device 100 requires servicing on an as needed basis, if the device has the ability to write data into configurable and readable memory 104 specifying its service needs, the User App may preferably be configured to interpret that data and alert the user to a servicing requirement.

In another preferred aspect, the User App may preferably be able to use other machine readable or data exchange methods to automatically complete certain fields. By way of example only, this could include using an optical reader such as a smartphone camera to read a barcode, matrix code, or other visual element on a device with configurable and readable memory 100 in order to automatically complete certain fields.

As another example, the User App may be configured to utilize a transceiver on the smartphone to scan and/or detect information contained in a Radio Frequency Identification (RFID) chip. The details of RFID chips would be understood by those of ordinary skill in the art. RFID chips may be attached to a number of devices and appliances. For example only, an RFID chip may be attached to a refrigerator. The chip may contain information specific to the refrigerator such as the types already mentioned above. Should a problem or break-down occur with the refrigerator, the user may scan the RFID chip on the refrigerator and use the User App to notify an authorized service agent of the problem.

It will be appreciated that the fields or steps described above for the User App may be varied, or certain fields or steps added or omitted entirely without departing from the scope of the present invention.

In one preferred aspect, where the user chooses a contact method that is non-verbal, the User App preferably automatically transmits data to the recipient that may be known, or not known, and exposed, or not exposed, to the user. By way of example only, this may include information such as a user's name, place of purchase, location, name of product installed, serial number of product, date of purchase, user's phone number, user's address and/or other contact details, model number, date of manufacture, batch number, intended jurisdiction of use, date of installation, installer ID, installer name, service schedule, error reports, location, date of first use, and/or other data. It will be appreciated that the fields described above may be varied, or certain fields added or omitted entirely without departing from the scope of the present invention.

In another preferred aspect, where the User App has read data from configurable and readable memory 104 of a device that includes contact data entered by an installer, the User App preferably verifies with an external server that the installer remains authorized by the manufacturer to provide technical support, service or warranty services prior to allowing a user to initiate contact. Authorization could take many different forms, the simplest being verification of a specific data field or fields in the User App against a registry of fields held on the server. In the case where the server verifies an installer as authorized by the manufacturer, the server will preferably send a command to the User App that would then allow the user to initiate contact using the information the User App has extracted from configurable and readable memory 104. In the instance where the server cannot verify the installer as being authorized, the server will preferably send a command to the User App preventing the user from initiating contact using the data the User App extracted from configurable and readable memory 104. The user will preferably be offered the option to update the User App with a set of default contact details specified by the manufacturer or data for a new authorized installer. The new authorized installer data may be matched against a field, or fields, from the User App to provide a higher level of relevance to the user. If the user chooses to update the User App with the manufacturer's default data, or a new authorized installer's data, the User App will preferably download the new data from the server and populate the associated fields in the smartphone's memory. After the data in the User App has been updated, the user will preferably be able to initiate contact from the User App using the new data.

In one preferred embodiment, it may be preferable for an external server to replace data in the User App without requiring confirmation from the user.

In one preferred aspect, where data in the User App has been modified or where a new user has taken control of device 100, the User App will preferably be capable of replacing the data stored in configurable and readable memory 104 with the new or changed data the next time the device and smartphone form a wireless communications link.

It is possible a situation could occur where a device is installed, but the installer fails to enter their data into the configurable and readable memory 104, or data stored in configurable and readable memory 104 becomes corrupted. In one preferred embodiment, where data cannot be acquired for critical fields which are necessary for the User App to offer a means for the user to initiate contact using information from configurable and readable memory 104, the User App preferably includes default contact details it can offer the user to initiate contact. In certain situations, it may be preferable for the User App to offer the ability for the user to specify their location, or allow the User App to determine the user's location (for example, with GPS), so that the User App can connect to an external server and download the data for an authorized installer servicing the user's location.

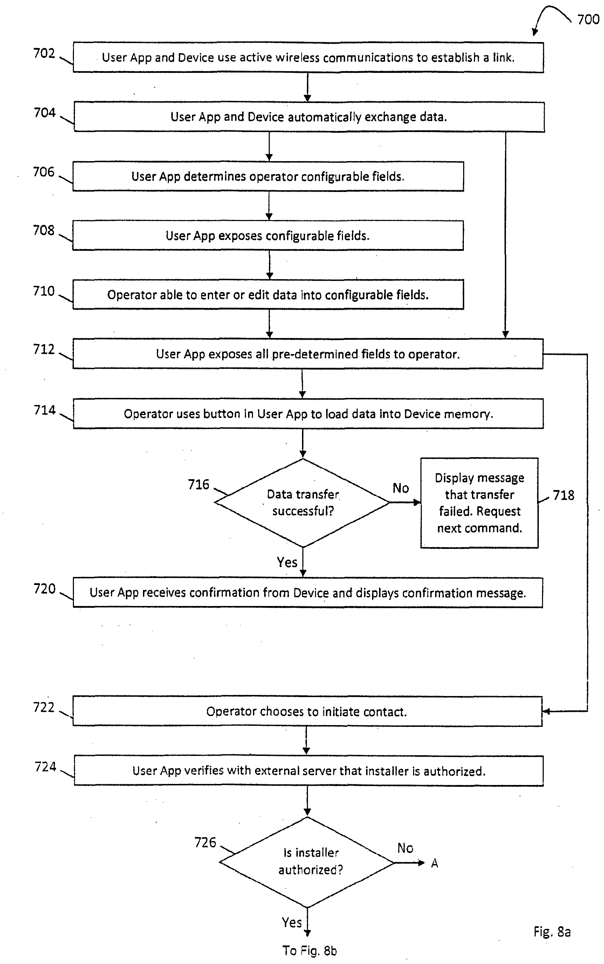

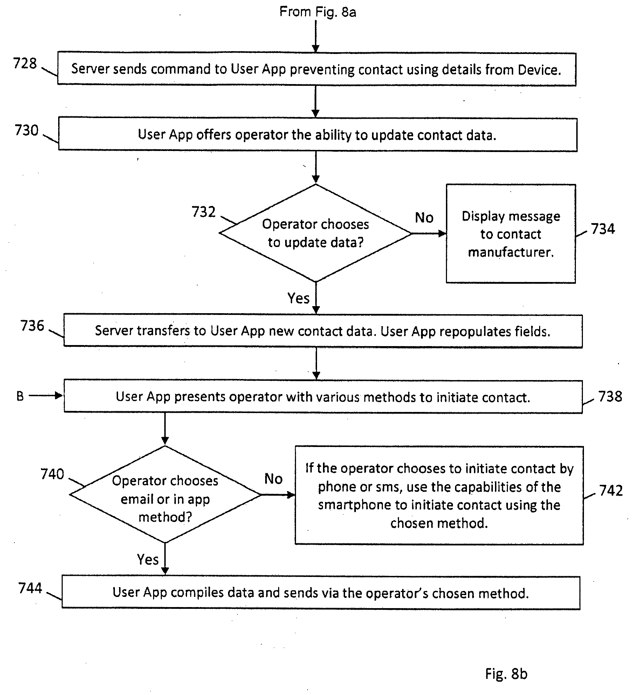

Fig. 8 is a flow diagram of method 700 showing a sequence of events between a user, the User App (Fig 7) and device 100, to illustrate the functionality of the User App. At step 702, smartphone 10 and device 100 establish an active wireless communications link allowing the User App to communicate with device 100. At step 704, the User App and device 100 preferably perform an initial data exchange, allowing the User App and device 100 to automatically populate, transfer, update, modify, amend, enter, initialize and/or delete any data between them as may be required or desired.

At step 706, the User App preferably determines what user configurable fields need to be exposed or displayed. In one preferred aspect, the configurable fields may be preset in the User App for device 100, or may be generated by the User App based on information reported by device 100 at step 704. At step 708, the User App preferably exposes those fields that can be configured by the user in a format that allows the user to input or modify the information contained therein. At step 710, the user preferably enters or edits any needed data in a configurable field preferably by touching the smartphone screen corresponding to the field they wish to edit, causing the User App to allow entry of data into the field touched through the smartphone touch screen. In some preferred embodiments data may be entered into the configurable fields by other machine readable or data exchange methods. By way of example only, this could include using an optical reader such as a smartphone camera to read a barcode, matrix code, or other visual element on device 100, or other wireless methods such as scanning an RFID tag.

At step 712, the User App also preferably exposes those pre-determined fields have been automatically populated from data exchanged at step 704. There may be other fields that are not exposed to the user that contain data transferred at step 704 into the User App. By way of example only, this may be information such as the device model number and serial number.

At step 714, when the user is satisfied with one or more of the configurable fields, they may preferably use a load button to transfer the appropriate data from the User App into the configurable and readable memory 104 of device 100 using an active wireless communications link. At step 716, The User App preferably monitors to ensure that the data is successfully transferred into the memory of device 100. At step 718, if device 100 reports an error or does not confirm a successful transfer, the User App preferably informs the user that the transfer failed and requests the next command. At step 720, if the User App receives confirmation from device 100 that the data was successfully transferred, the User App preferably indicates that the data was successfully transferred. In some embodiments it may be preferable for the user configurable data in the User App to remain stored in the User App and not be transferred to device 100. In that instance, step 714 could be omitted, the data being stored dynamically in the User App as amendments or additions are made by the user.

At step 722, the user may choose to initiate contact with an outside party based on contact data transferred from device 100. Where the User App has transferred data from a device that was entered by an installer, in one preferred embodiment it may be desirable for the User App to verify with an external server that the installer remains authorized by the manufacturer to work on that type of device prior to allowing the user to make contact. At step 724, the User App preferably verifies with an external server that an installer remains authorized. At step 726, the User App preferably receives a message from the external server identifying whether the installer is authorized or not authorized.

When the installer is not authorized, then at step 728, the User App preferably prevents the user from using the contact details from device 100 to initiate contact. For example, referring to Fig. 7, the User App may be programmed to disable phone call button 616, email button 618, SMS button 620, or direct communication button 622. At step 730, the User App preferably offers the user the ability to update the User App contact data with an authorized installer or manufacturer details. At step 732, if the user chooses to update the contact data, the server at step 736 preferably transfers new contact data to the User App, which the User App uses to repopulate its fields and replace the data of the unauthorized installer. If the user chooses not to update the contact data at step 732, the User App preferably displays a message directing the user to contact the manufacturer and provides a set of default contact details.

If the installer's details are verified as being authorized at step 726, or where data of an authorized installer has been downloaded at step 736, the User App preferably presents the user with various active buttons. For example, referring again to Fig. 7, such buttons may include phone call button 616, email button 618, SMS button 620, or direct communication button 622, any of which the user can press to initiate contact using the chosen communication method and native capabilities of the smartphone. At step 740, if the user chooses a non-verbal method of communication with the manufacturer or an authorized installer or agent, the User App at step 744 preferably compiles data and/or prepares a report and sends the data and/or report via the user's chosen method using the contact data stored in the User App. At step 742, where the user chooses to initiate contact via phone or SMS, the User App preferably causes the smartphone to make a call or send a standard form SMS message to the manufacturer and/or authorized installer and/or authorized agent.

After device 100 has stored data for the first time, each subsequent time the User App establishes a communications link with that device, the User App preferably dynamically updates screen 600 (Fig. 7) with the information currently stored in configurable and readable memory 104 after an automatic exchange of data at step 704.

It will be appreciated that the steps described above may be performed in a different order, varied, or certain steps added or omitted entirely without departing from the scope of the present invention.

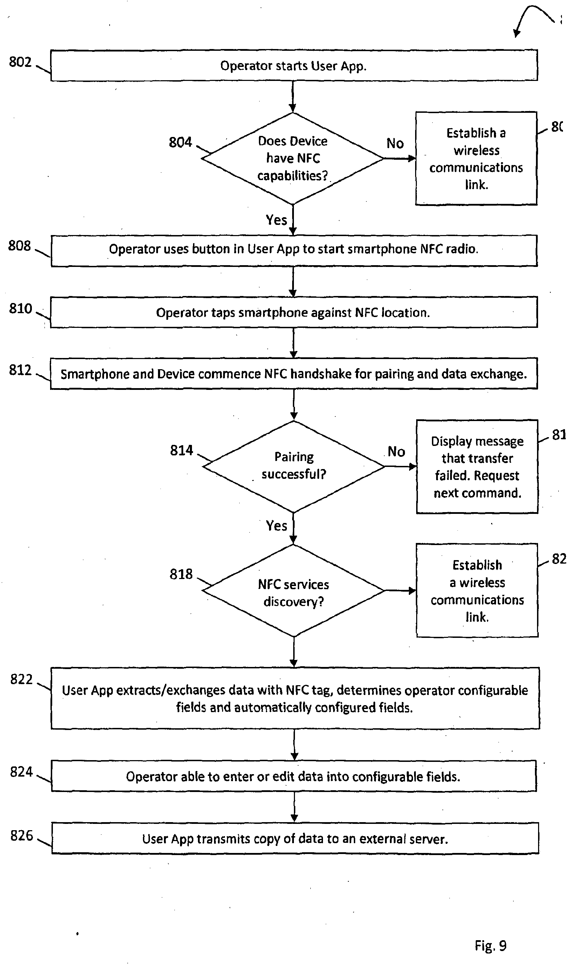

Fig. 9 is a flow diagram of a method 800 showing a sequence of events between a user, the User App (Fig. 7) and device 100, to illustrate the functionality of the User App using NFC. At step 802, the user starts the User App for the first time. At step 804, the User App preferably asks the user if device 100 has NFC capabilities. This will usually be determined from the device user manual, but it may be visually identified with an NFC location marked on the outside of the device. If the device does not have NFC capabilities, or the user cannot determine if the device has NFC capabilities, they will preferably proceed to step 806 and establish a wireless communications link using the method from step 306 in Fig. 4.

If the user determines that their device has NFC capabilities, at step 808 the user preferably presses a button in the User App that activates the smartphone NFC radio and places it into pairing mode. At step 810, the user preferably taps the smartphone against an NFC location on the device 100. At step 812, the smartphone and device commence pairing according to NFC protocols to establish a wireless link. In one preferred embodiment, at step 810 the action of tapping the smartphone against an NFC location on the device preferably causes the smartphone to automatically activate its NFC radio in pairing mode and commence pairing according to NFC protocols without the user having to press a button inside the User App, the methodology of which would be understood by those of ordinary skill in the art. It is envisaged that other methods of pairing a smartphone with an NFC capable device are possible and would fall within the scope of the present invention.

At step 814, if the pairing process fails, the User App preferably indicates to the user a failed pairing attempt at step 816. If the pairing process is successful, at step 818 the smartphone determines from device 100 what NFC services and capabilities are supported. One service supported by NFC is the capability of delivering similar data transfer functionality to an RFID tag, but with two-way, peer-to-peer communication between the smartphone and device endpoints. Another service supported by NFC is the ability to operate as a configuration tool for "bootstrapping" alternate wireless connections. Bootstrapping is a term given to the process where an App or operating system uses information exchanged via NFC to automatically complete the steps of enabling, pairing and establishing an alternate wireless communications link between a smartphone and device via methods such as network Wi-Fi, Wi-Fi Direct or Bluetooth.

If at step 818, the NFC services reported to the User App are of an NFC tag type, the User App at step 822 preferably reads or exchanges data with the device and automatically populates fields within the User App while also determining which fields to expose that are user configurable. In one preferred aspect, the configurable fields may be preset in the User App for device 100, or may be generated by the User App based on information reported by device 100. At step 824, the user is preferably able to enter or edit data in the user configurable fields.

At step 826, the User App transmits a copy of the data transferred from device 100 and user configured fields to an external server using a native communication method supported by the smartphone.

If at step 818, the NFC services reported to the User App are of a configuration tool type for establishing an alternate wireless communications link, at step 820 the User App will preferably use the NFC data to automatically initiate the steps for enabling, pairing and establishing an alternate wireless communications link via a method such as network Wi-Fi, Wi-Fi Direct or Bluetooth. The User App will then preferably follow a methodology such as that outlined in Fig. 6.

It will be appreciated that the steps described above may be performed in a different order, varied, or certain steps added or omitted entirely without departing from the scope of the present invention. For example only, the User App may be programmed without transmitting a copy of the data transferred from device 100 and user configured fields to an external server if desired. For example only, the use of NFC data as a configuration tool for establishing an alternate wireless communications link may be executed by the smartphone operating system rather than the User App.

If desired, the User App may be programmed to send details of device 100 to a manufacturer or the manufacturer's authorized agent without the user actively sending the details. For example, the User App may be configured to extract data from the configurable memory of device 100 via a wireless connection and populate at least a portion of a plurality of pre-defined fields of the User App with the extracted data. Another portion of the pre-defined fields are preferably populated with information provided by the user of the smartphone. The User App transmits data from the pre-defined fields to a remote location, such as the manufacturer or the manufacturer's authorized agent, using the smartphone. The transmitted data preferably includes at least a portion of the extracted data and at least a portion of the information provided by the user of the smartphone. Preferably, the data is transmitted to the remote location without the user utilizing a user interface on the smartphone.

After receipt of the transmitted data at the remote location, the data is preferably used to update a record on a database, the record corresponding to the device and including manufacturing information associated with the device. Preferably, the record was created for the device after the device was manufactured, but prior to the device leaving the manufacturing facility.

The extracted data may include, for example, a unique device identifier associated with the device and/or information identifying an installer of the device if the device is of the type adapted for installation in a residential or commercial structure. Such a device may be, for example, a garage door opener or appliance. An example of information provided by the user is the user's identity, such as a user address. By having information such as the user's identity, and the identity of the device, a manufacturer may compile an overview of the types of persons using their products, and where their products are being used.

While the present invention allows many modes of operation with respect to a user's installation, it is envisaged that details such as the location of an installation and specifics of a device could become known to the manufacturer as a matter of course. In one preferred embodiment, the User App preferably supports push notifications allowing information from an external server to be sent to the User App informing a user of product upgrades and new or improved features. The technical aspects of push notifications are a well known to those skilled in the art of applications development.

The ability to support push notifications to the user via the User App could be used to warn the user of any safety issues or product recalls using accurate data for the user's particular device. As part of the notification procedure, it may be preferable for the user to confirm they have received and understood a safety or product recall notification and any instructions in the User App. The user would preferably be offered a facility in the User App to rectify the issue which by way of example could include processing a return authorization or schedule a service from an installer or manufacturer's nominated party. In one preferred embodiment, where the device is a functional part of an integrated control system, it may be preferable for the User App to disable the user's ability to use functions of the product, either by disabling elements of the User App or in the product itself.

In some embodiments, it may be preferable to have a single App that combines the functional elements of the Installer App and User App, configured in such a way that a manufacturer or installer could access the Installer App functions while limiting users to the User App functions.

In one preferred embodiment, it may be preferable for the configurable and readable memory to support data input from one or more of the following sources: installer, user, manufacturer, or device.

The foregoing description is by way of example only, and may be varied considerably without departing from the scope of the present invention. For example only, the personal controller may be omitted by incorporating certain control and program functions directly into a microprocessor that is integrated with the wiring of a building. Where a personal controller is used, instead of, or in addition to a graphical user interface, the personal controller may be configured with a voice-activated system that inputs data according to the voice commands of the user. The details associated with voice-activated technology would be well understood by those of ordinary skill in the art.

Aspects of the present invention may be used in a variety of environments. For example only, the invention can be adapted for use with lighting, gates, blinds, garage doors, fans, pools, timers, power outlets, consumer electronics, computers, vehicles, and air conditioning systems.

Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A method for facilitating a request for technical assistance for a device (100) having a configurable memory (104), the device (100) being configured to only support wireless communications (102) and data management to permit an installer of the device (100) to enter information into the configurable memory (104), the device being adapted for installation in a residential or commercial structure, the method comprising:
establishing (502) an active wireless communications link between a personal controller (400) of an installer and the device (100);
performing (504) an initial data exchange between the personal controller (400) of the installer and the device (100);
generating (506, 508) for display on the personal controller (400) of the installer configurable fields based on the data (402-424) exchanged between the personal controller (400) and the device (100);
allowing entry of data into the configurable fields;
loading, in the configurable memory (104) of the device (100) using the active wireless communication link, contact details (418-424) of the installer of the device (100);
configuring a processor on a personal controller (600) of a user with a plurality of pre-defined fields that correspond to data (602-622) specific to the device (100);
extracting (706) data (602-622) from the configurable memory (104) of the device (100) via a wireless connection, the specific data (602-622) including the contact details (616-622) of the installer of the device (100);
populating (712) at least a portion of the pre-defined fields on the personal controller (600) of the user with the extracted data (602-622); and
initiating (722) contact with the installer, using the personal controller (600) of the user, utilizing at least the contact details (616-622) extracted from the device (100).

2. The method of claim 1, further comprising establishing (702) a peer-to-peer communications link between the personal controller (600) of the user and the device (100) to extract, from the configurable memory (104), the data (602-622) specific to the device (100).

3. The method of claim 2, wherein the peer-to-peer communications link utilizes a SoftAP.

4. The method of claim 1, wherein the configurable memory (104) of the device (100) is pre-loaded by a manufacturer of the device (100) with identifying data (610-614) specific to the device (100), the extraction (706) of the data (602-622) including using the personal controller (600) of the user to establish a wireless communications link with the device (100) to download the pre-loaded data (610-614) to populate (712) at least a portion of the pre-defined fields.

5. The method of claim 4, wherein at least one of the pre-defined fields is populated (712) with at least a portion of the pre-loaded data (610-614) by the personal controller (600) without manual user input.

6. The method of claim 1, wherein a portion of the data (602-622) specific to the device (100) that is used to populate (712) the pre-defined fields is supplied by a user.

7. The method of claim 6, wherein the transmitting (722) of the request for technical assistance for the device (100) includes transmitting (722) both data supplied by the user and data (602-614) extracted from the device (100).

8. The method of claim 1, wherein the request for technical assistance includes the contact details (616-622) extracted from the device (100), and is transmitted automatically to a remote location based on a pre-defined service schedule associated with the device (100).

9. The method of claim 8, further comprising receiving, at the remote location, the data (602-614) transmitted from the personal controller (600) of the user and updating a record on a database, the record corresponding to the device (100) and including manufacturing information associated with the device (100).

10. The method of claim 8, wherein the data (602-614) is transmitted automatically to the remote location without the user utilizing a user interface on the personal controller (600) of the user.

11. The method of claim 1, further comprising uploading data from at least a portion of the pre-defined fields to the configurable memory (104) of the device (100) utilizing only a wireless peer-to-peer communications link.

## Patentansprüche

1. Ein Verfahren zur Unterstützung einer Anfrage nach technischer Assistenz für ein Gerät (100) mit einem konfigurierbaren Speicher (104), wobei das Gerät konfiguriert ist, zur Erlaubnis eines Installateurs des Gerätes (100) Information in den konfigurierbaren Speicher (104) einzugeben, ausschließlich drahtlose Kommunikation und Datenmanagement zu unterstützen, wobei das Gerät für eine Installation in einer Heim- oder Handelsstruktur installiert zu werden, wobei das Verfahren umfasst:
Aufbauen (502) einer aktiven drahtlosen Kommunikationsverbindung zwischen einer persönlichen Steuerung (400) eines Installateurs und dem Gerät (100);
Durchführen (504) eines initialisierenden Datenaustausches zwischen der persönlichen Steuerung (400) des Installateurs und dem Gerät (100);
Generieren (506, 508) zur Darstellung auf der persönlichen Steuerung (400) des Installateurs konfigurierbarer Felder basierend auf Daten (402-424), die zwischen der persönlcihen Steuerung (400) und dem Gerät (100) ausgetauscht werden;
Zulassen von Dateneinträgen in die konfigurierbaren Felder;
Laden von Kontaktdetails (418-424) des Installateurs des Gerätes (100) in den konfigurierbaren Speicher (104) des Gerätes (100) unter Verwendung der aktiven drahtlosen Kommunikationsverbindung;
Konfigurieren eines Prozessors auf einer persönlichen Steuerung (600) eines Benutzers mit einer Vielzahl von definierten Feldern die zu für das Gerät (100) spezifischen Daten (602-622) gehören;
Extrahieren (706) von Daten (602-622) aus dem konfigurierbaren Speicher (104) des Gerätes (100) über eine drahtlose Verbindung, wobei die spezifischen Daten (602-622) die Kontaktdetails (616-622) des Installateurs des Gerätes (100);
Befüllen (712) wenigstens eines Teils der vordefinierten Felder auf der persönlichen Steuerung (600) des Benutzers mit den extrahierten Daten (602-622); und
Initiieren (722) eines Kontakts mit dem Installateur durch Benutzen der persönlichen Steuerung (600) des Benutzers, unter Verwendung der der Kontaktdetails (616-622), die aus dem Gerät (100) extrahiert sind.

2. Das Verfahren nach Anspruch 1, ferner umfassend Aufbauen (702) einer Punkt-zu-Punkt-Kommunikationsverbindung zwischen der persönlichen Steuerung (600) des Benutzers und des Gerätes (100) zur Extraktion der für das Gerät (100) spezifischen Daten (602-622) aus dem konfigurierbaren Speicher (104).

3. Das Verfahren nach Anspruch 2, wobei die Punkt-zu-Punkt-Kommunikationsverbindung eines SoftAP verwendet.

4. Das Verfahren nach Anspruch 1, wobei auf den konfigurierbaren Speicher (104) des Gerätes (100) durch einen Hersteller des Gerätes (100) das Gerät (100) spezifisch identifizierende Daten (610-614) vorgeladen sind, wobei die Extraktion (706) der Daten (602-622) eine Verwendung der persönlichen Steuerung (600) des Benutzers umfasst, um eine drahtlose Kommunikationsverbindung mit dem Gerät (100) aufzubauen, um die vorgeladenen Daten (610-614) zur Befüllung (712) auf wenigstens einen Teil der vordefinierten Felder herunterzuladen.

5. Das Verfahren nach Anspruch 4, wobei wenigstens eines der vorbestimmten Felder durch die persönliche Steuerung befüllt (712) ist mit wenigstens einem Teil der vorgeladenen Daten (610-614) ohne manuelle Benutzereingabe.

6. Das Verfahren nach Anspruch 1, wobei ein Teil der für das Gerät (100) spezifischen Daten (602-622), der verwendet wird, die vordefinierten Felder zu befüllen, von einem Benutzer bereitgestellt wird.

7. Das Verfahren nach Anspruch 6, wobei das Übertragen (722) der Anfrage nach technischer Unterstützung für das Gerät (100) umfasst: Übertragen (722) sowohl der Daten bereitgestellt durch den Benutzer als auch der aus dem Gerät (100) extrahierten Daten (602-614).

8. Das Verfahren nach Anspruch 1, wobei die Anfrage nach technischer Assistenz die aus dem Gerät (100) extrahierten Kontaktdetails (616-622) umfasst, und automatisch zu einem entfernten Ort basierend auf einem vordefinierten mit dem Gerät (100) verknüpften Zeitplan übertragen wird.

9. Das Verfahren nach Anspruch 8, ferner umfassend Empfangen der von der persönlichen Steuerung (600) des Benutzers übertragenen Daten (602-614) am entfernten Ort und aktualisieren eines Eintrages in einer Datenbank, wobei der Eintrag zum Gerät (100) gehört und Herstellerinformationen enthält, die mit dem Gerät (100) verknüpft sind.

10. Das Verfahren nach Anspruch 8, wobei die Daten (602-614) automatisch zum entfernten Ort ohne den eine Benutzerschnittstelle auf der persönlichen Steuerung (600) des Benutzers verwendenden Benutzer übertragen werden.

11. Das Verfahren nach Anspruch 1, ferner umfassend Hochladen von Daten aus wenigstens einem Teil der vordefinierten Felder des konfigurierbaren Speichers (104) des Gerätes (100) durch Verwendung ausschließlich einer drahtlosen Punkt-zu-Punkt-Kommunikationsverbindung.

## Revendications

1. Procédé pour faciliter une requête d'assistance technique pour un dispositif (100) ayant une mémoire configurable (104), le dispositif (100) étant configuré pour supporter seulement des communications sans fil (102) et une gestion de données pour permettre à un installateur du dispositif (100) d'entrer de l'information dans la mémoire configurable (104), le dispositif étant adapté pour l'installation dans une structure résidentielle ou commerciale, le procédé comprenant:
l'établissement (502) d'un lien actif de communications sans fil entre un contrôleur personnel (400) d'un installateur et le dispositif (100);
la réalisation (504) d'un échange initial de données entre le contrôleur personnel (400) de l'installateur et le dispositif (100); la génération (506, 508) pour affichage sur le contrôleur personnel (400) de l'installateur de champs configurables basés sur les données (402 - 424) échangées entre le contrôleur personnel (400) et le dispositif (100);
l'autorisation d'entrée de données dans les champs configurables ;
le chargement, dans la mémoire configurable (104) du dispositif (100) en utilisant le lien actif de communications sans fil, de détails de contact (418 - 424) de l'installateur du dispositif (100);
la configuration d'un processeur sur un contrôleur personnel (600) d'un utilisateur avec une pluralité de champs prédéfinis qui correspondent à des données (602 - 622) spécifiques du dispositif (100);
l'extraction (706) de données (602 - 622) à partir de la mémoire configurable (104) du dispositif (100) au moyen d'une connexion sans fil, les données spécifiques (602 - 622) incluant les détails de contact (616 - 622) de l'installateur du dispositif (100);
le renseignement (712) d'au moins une partie des champs prédéfinis sur le contrôleur personnel (600) de l'utilisateur avec les données extraites (602 - 622); et
l'amorçage (722) du contact avec l'installateur, en utilisant le contrôleur personnel (600) de l'utilisateur, en utilisant au moins les détails de contact (616 - 622) extraits du dispositif (100).

2. Procédé selon la revendication 1, comprenant en outre l'établissement (702) d'un lien de communications de poste à poste entre le contrôleur personnel (600) de l'utilisateur et le dispositif (100) pour extraire, à partir de la mémoire configurable (104), les données (602 - 622) qui sont spécifiques au dispositif (100).

3. Procédé selon la revendication 2, dans lequel le lien de communications de poste à poste utilise une application logicielle.

4. Procédé selon la revendication 1, dans lequel la mémoire configurable (104) du dispositif (100) est pré-chargée par un fabricant du dispositif (100) avec des données d'identification (610 - 614) qui sont spécifiques au dispositif (100), l'extraction (706) des données (602 - 622) incluant l'utilisation du contrôleur personnel (600) de l'utilisateur pour établir un lien de communications sans fil avec le dispositif (100) pour télécharger les données pré-chargées (610 - 614) pour renseigner (712) au moins une portion des champs prédéfinis.

5. Procédé selon la revendication 4, dans lequel au moins l'un des champs prédéfinis est renseigné (712) avec au moins une portion des données pré-chargées (610 - 614) par le contrôleur personnel (600) sans intervention manuelle de l'utilisateur.

6. Procédé selon la revendication 1, dans lequel une portion des données (602 - 622) spécifiques du dispositif (100) qui sont utilisées pour renseigner (712) les champs prédéfinis est fournie par un utilisateur.

7. Procédé selon la revendication 6, dans lequel la transmission (722) de la requête d'assistance technique pour le dispositif (100) inclut la transmission (722) à la fois de données fournies par l'utilisateur et de données (602 - 614) extraites du dispositif (100).

8. Procédé selon la revendication 1, dans lequel la requête d'assistance technique comprend les détails de contact (616 - 622) extraits du dispositif (100), et est transmise automatiquement à un site distant sur la base d'un schéma de service prédéfini associé au dispositif (100).

9. Procédé selon la revendication 8, comprenant en outre la réception, au site distant, des données (602 - 614) transmises à partir du contrôleur personnel (600) de l'utilisateur et la mise à jour d'un enregistrement sur une base de données, l'enregistrement correspondant au dispositif (100) et incluant l'information de fabrication associée avec le dispositif (100).

10. Procédé selon la revendication 8, dans lequel les données (602 - 614) sont transmises de façon automatique au site distant sans que l'utilisateur utilise une interface d'utilisateur sur le contrôleur personnel (600) de l'utilisateur.

11. Procédé selon la revendication 1, comprenant en outre le téléchargement de données provenant d'au moins une portion des champs prédéfinis de la mémoire configurable (104) du dispositif (100) en utilisant seulement un lien de communications sans fil de poste à poste.
